# EUROPEAN PATENT SPECIFICATION

(11) **EP 2 808 358 B1**
(45) Date of publication and mention of the grant of the patent: **24.04.2019**
(21) Application number: 13002805.3
(22) Date of filing: 31.05.2013
(51) Int. Cl.: C08K 9/02

(54) **COATED AMMONIUM POLYPHOSPHATE, ITS USE AND MANUFACTURE**
BESCHICHTETES AMMONIUMPOLYPHOSPHAT, SEINE VERWENDUNG UND HERSTELLUNG
POLYPHOSPHATE D'AMMONIUM REVÊTU, SON UTILISATION ET FABRICATION

(43) Date of publication of application: 03.12.2014
(73) Proprietor: BK Giulini GmbH, 67065 Ludwigshafen (DE)
(72) Inventor: Shapiro, Evgeny, Haifa Bay 26111 (IL); Panagiotidis, Konstantin, 68526 Ladenburg (DE); Staffel, Thomas, 67269 Grünstadt (DE)
(74) Representative: Zellentin & Partner mbB Patentanwälte

(56) References cited:
- EP-A1- 0 180 795
- WO-A2-02/072713
- US-A1- 2010 163 420

## Description

The present invention according to claims 1 to 15 relates to a coated ammonium polyphosphate, to a coating process, to the use of the coated ammonium polyphosphate and to intumescent compositions comprising the coated ammonium polyphosphate.

Ammonium polyphosphate (abbreviated APP) is the inorganic salt of polyphosphoric acid and ammonia and has the sum formula (NH₄PO₃)ₙ and the following structure:

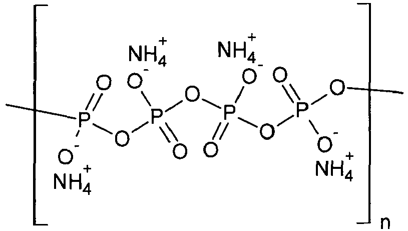

APP is a crystalline compound which exists in various polymorphous forms. There are two main polymorphs: crystal phase I and crystal phase II. Ammonium polyphosphate in crystal phase I (APP-I) is characterized by a variable linear chain length with "n" values less than 100, possesses a low decomposition temperature (approximately 2000°C) and a high water solubility (up to 20 %). The molecular weight of ammonium polyphosphate in crystal phase II (APP-II) is much higher, with "n" values of much more than 100. APP-II has a higher thermal stability (decomposition starts at approximately 280°C) and a lower water solubility than APP-I (4 - 5 % vs. 20 %).

APP is generally a non-toxic, environmentally friendly material. When heated it emits ammonia and phosphoric acid and may launch intumescent process. An intumescent system swells as a result of heat exposure, thus increasing in volume and decreasing in density. Intumescent systems are typically used in passive fire protection. They can be roughly divided into intumescents producing soft char and such producing hard char. Soft char protects against fire due to its low density providing some insulation. It also fills gaps that are either present from the beginning or form due to melting of other materials. Hard char additionally exerts pressure e.g. enabling a closing of pipes. Besides the volume expansion a content of water (as hydrate) is often part of the composition that provides cooling upon evaporation. The reaction/expansion can also be an endothermic process consuming some heat in itself.

Therefore, APP is applied as a component of halogen-free fire retardants e.g. in plastics, textiles and paints, including water-based paints.

The application of APP in water-based paints is limited by the hydrolytic instability of APP. In contact with water APP is slowly hydrolyzed to form mono ammonium phosphate according to the following reaction equation:

[NH₄ PO₃]ₙ + n H₂O →n (NH₄)H₂PO₄

Higher temperatures and prolonged exposure to water accelerate the hydrolysis. The process may affect the properties of the paint during storage: phase separation, changes in viscosity, colour, opacity, and even loss of the intumescent effect can occur. To avoid these effects, the surface of APP crystals can be modified or coated with an inert material to prevent contact with water.

DE 35 31 500 A1 is one example for APP type materials coated with a melamine formaldyde resin to render the surface hydrophobic.

In EP 970 985 B1 a surface modified flame retardant is described. The coating process comprises encapsulating the flame retardant with a coating agent being an organo functional silane or a mixture of organo functional silanes or organo functional siloxanes. As flame retardant ammonium orthophosphate, ammonium polyphosphate, melamine phosphate, melamine borate are mentioned In US 2010/163420, EP 0 180 795 and WO 02/072713 other aqueous coating compositions based on silica or coated APP are disclosed.

The use of organic solvents and the content of organic compounds like melamine formaldehyde resins or siloxanes that can generate toxic substances upon burning are disadvantageous for the use of such APP in intumescent paints. There is a need for non-toxic coatings of APP that allow to provide water-based solvent free intumescent paints and coatings.

Surprisingly it was found that it is possible to coat ammonium polyphosphate with inorganic materials selected from silica and alumina providing protection from hydrolysis. A coated ammonium polyphosphate in the crystal phase II shows superior properties when used in water based paints and coatings like increased solubility and reduced viscosity of the water based formulation.

Thus, the above object is solved by ammonium polyphosphate in the crystal phase II coated with silica or alumina, its use as flame retardant in paints and coatings and to intumescent compositions like paints and coatings comprising it. The invention further provides a method for coating ammonium polyphosphate comprising the steps of: providing ammonium polyphosphate particles, mixing them with a suspension of colloidal silica or alumina powder, and kneading the mixture while evaporating the water at a maximum temperature of 110 °C.

The coated ammonium polyphosphate in the crystal phase II has an increased solubility in water (typically 11 - 16 %) but does not undergo hydrolysis. It is completely compatible with water-soluble intumescent paints, significantly reducing their viscosity. This coated material does not contain hazardous organic materials. The new coating method with alumina and silica renders the coated APP suitable for a lot of applications e.g. in the paint industry.

The manufacture of APP and specifically of APP II is known per se and will not be described in detail. For example, US 2012/0207660 A1 describes a method for manufacturing APP II from H-type P₂O₅ and diammoniumphosphate in an atmosphere comprising ammonia gas. Other methods are known and suitable.

The APP II should have a particle size distribution as desired for the intended use. APP suitable to be used as flame retardant should preferably have at least 85 % of the particles smaller than 45 µm, a preferred particle size distribution is D_{0.9} <40 µm, D_{0.5} < 20 µm, D_{0.1} < 6 µm, and D_{AV} from 20 to 25 µm, preferably about 22 µm, all determined via laser diffraction on a dispersed particulate sample, e.g. with a MALVERN Mastersizer 2000 of Malvern Instruments, USA. If the particle size of the APP is not as desired it has to be adjusted before coating. The desired particle size can be achieved in any manner known per se, e.g. sieving, grinding, grinding and sieving, recrystallization and many more.

According to the present invention aqueous suspensions of colloidal silica (e.g. Ludox®-series produced by Grace & Co. Conn.) or of alumina powder (e.g. highly dispersible boehmite alumina powder Disperal® P2, produced by Sasol) were found suitable for applying a silica or alumina film on the APP surface.

Colloidal silica particles are roughly spherical, non-porous and dispersible in water. They are typically very small silica particles in the low nanometre size range and have a dense silica core and a surface covered by silanol (Si-OH) groups as illustrated below:

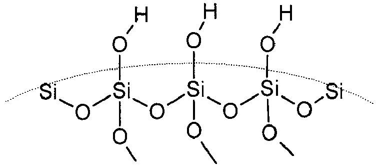

Because of their small particle size and high surface area, these silanol groups interact strongly with various substrates, to afford a coating of high strength and durability. However, for the same reasons, the free colloidal silica particles are very unstable and tend to react with each other to form large settling agglomerates of silica gel. To prevent the aggregation and gelling, the silica particles in suspension are stabilized immediately after manufacture by inducing a charge on the surface to make the particles repel each other.

The colloidal silicas are divided into grades depending on the stabilization process. The alkaline grade silica is stabilized by treatment with bases (usually NaOH or NH₄OH) to provide a negatively charged surface, leaving the counter ions (Na⁺ or NH₄⁺) in solution to balance the charge on the surface as illustrated below:

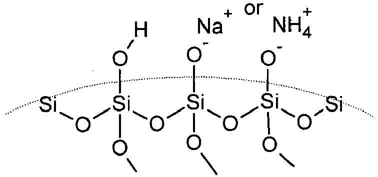

These grades are often called "anionic" and have a pH in the range from 9 to 10. If a grade with sodium counter ions is used in a coating formulation, the sodium remains in the coating after it is applied and dried. On the other hand, NH₄OH is volatile and will evaporate from the coating during drying.

Below pH 8 the anionic grade colloidal silica particles lack a sufficient charge for remaining stable. In case the coating formulation has to be maintained in the acidic to neutral pH region, it is possible to modify a small part of the silica particles with an aluminate compound to form a so called "pH stable grade" with the following structure 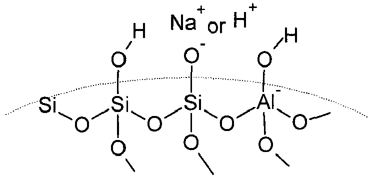 The stability range is extended to from about 4 to 10.5. Since only a small amount of the particle surface is modified, the particle chemistry is predominately that of the negatively charged silica surface.

In "cationic" grades, the silica particles are fully coated with alumina such that the net particle charge is positive. The particles may be considered to be a core-shell structure in which the core is composed of the silica particle and the aluminum compound is the shell as shown below:

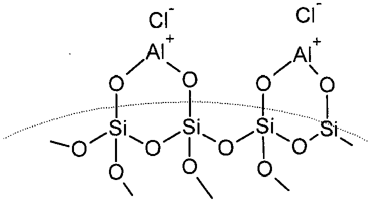

The counter ion is mostly a chloride and the pH stability is in the range from pH 3.5 to 6.0.

The properties of various grades of Ludox® silicas that were found useful for the coating method according to the invention are listed in table 1.

**Table 1**

| **Name** | **Grade** | **Counter ion** | **Average particle size** | **Specific surface area** | **SiO₂** | **pH** |
|---|---|---|---|---|---|---|
| TMA | pH stable | - | 22 nm | 140 m²/g | 34% | 4-7 |
| HS-40 | Anionic | Na⁺ | 12 nm | 220 m²/g | 40 % | 9.7 |
| AS-30 | Anionic | NH₄⁺ | 7 nm | 350 m²/g | 30 % | 9.6 |
| CL | Cationic | Cl⁻ | 7 nm | 350 m²/g | 30 % | 4 |

Suitable alumina powders are e.g. the Disperal® type aluminas which are nano-sized in the dispersed phase and recommended for a wide range of applications including surface coating as well as paint detackyfication (reduction of paint viscosity). Properties of Disperal® P2 are as follows: Chemical composition: 72 % Al₂O₃, 4.0 % NO₃, 0.002 % Na₂O, loose bulk density: 850 g/l, average particle size for powder: 45 µm, specific surface area (after activation at 550°C for 3 h): 260 m²/g, pore volume (after activation at 550°C for 3 h): 0.5 ml/g and water dispersibility 97 %. Disperal® alumina powder, mixed with water or an organic solvent, results in a gel of varying viscosity (depending on the pH and the amount of water) which is a colloidal system with nano-sized alumina particles.

According to the coating method of the invention, APP particles are blended with suspensions of silica or alumina followed by removal of water under stirring/kneading, preferably at an elevated temperature. It can be useful to apply a ventilation to assist evaporation of the water. The obtained particles are typically sieved using e.g. a 125 µm sieve. Thereby the desired particle size distribution is ensured. Of course, the particle size distribution of the initial APP particles has to lie in the desired range or below, since the method according to the invention does not diminish the particle size. A reduction of the particle size after coating would damage the coating and is not feasible.

The mixing usually takes place at ambient temperature. The temperature during kneading is typically set to 90 - 110 °C, preferably to 95 - 105 °C. For the coating with alumina or cationic grade silica the temperature has to be kept below 110 °C, preferably to below 100 °C, to avoid a reaction partly exchanging ammonium with aluminium. The temperature is adjusted to provide a compromise between stability of the components and particles and the rate of evaporation of water. Ventilation, e.g. using a vacuum pump, can be applied to enhance the evaporation rate.

The ratio of water to solids (w/w) in the mixture of APP and silica or alumina should lie within the range from 0.1 to 1.0, preferably from 0.2 to 0.7, and most preferred from 0.25 to 0.35. Coating is usually not feasible when the water content is less then 0.1 w/w because of problems with uniform distribution of the coating agent on the surface of the APP. The use of water in amount of more than 1.0 w/w is possible but not advantageous. More time is required to evaporate the water without benefit for the processing.

Analysis data showed that the coating of APP-II using aqueous suspensions of colloidal silica yielded material with an unexpectedly higher solubility compared to the uncoated material (e.g. up to 16 % vs. 4 %) regardless of any effect on the particle size distribution.

The solubility depends on the type of coating material and its amount. The solubility of APP-II coated with "pH stable" grade silica provides the maximum solubility (e.g. up to 16 %) while the "anionic" grade silica with the ammonium counter ion and the "cationic" grade silica give material with a lower solubility (e.g. around 8 %). The effect of the amount of silica on the solubility within the same grade was less distinguished. At a silica/APP ratio of 0.01 - 0.1 w/w the solubility varied irregularly between 11.0 and 16.0 % for coatings with "pH stable" grade silica.

In general, the acidity of the material coated with "pH stable" grade silica (e.g. pH 4.6 - 5.1) is higher than the starting APP (e.g. pH 5.3) while the cationic and anionic grade silicas afforded products with lower acidity (e.g. pH 5.8 - 6.3).

All these phenomena can be explained in terms of the increased hydrophilicity of the silica shell covering the APP core. In diluted aqueous suspensions, these particles can readily split out the solid phase and penetrate into the liquid phase. Nevertheless, the silica coated particles are protected from hydrolysis. This was proven by an IR study of the residue after evaporation of the supernatant liquor after hydrolysis of the coated material in a 9 % suspension in water for 3 h at 110°C. The IR spectra proved that the APP-II was not hydrolyzed, contrary to an APP coated with melamine.

Generally, it is possible to apply more than one coating onto APP particles. Therefore, APP coated according to the invention and with any other known coating material either below or above the silica or alumina coating also falls within the scope. However, in view of a use in water based solvent free compositions the known coatings with melamine formaldehyde resin or other organic resins as well as with organo silanes or organo siloxanes are less preferred as additional coatings.

The coated APP-II according to the invention is particularly suitable as flame retardant in intumescent paints and coatings. Thus, the invention also relates to the use of APP-II coated with silica or alumina as component in water based intumescent compositions such as paints, coatings and so on.

A preferred composition is a water based intumescent paint, especially a water based solvent free intumescent paint. A typical intumescent paint mainly contains: water, a binding agent, e.g. a vinyl-acetate dispersion and pentaerythritol, melamine and APP-II as part of the intumescent system. Optionally it contains a rheological additive like carboxymethylcellulose, a pH stabilizer, e.g. ammoniumhydroxide, a dispersant, a defoamer, and a pigment, e.g. titanium dioxide. All the components are used in the usual amounts, e.g. water 25 %, binding agent 23 % and APP 15 to 35 %.

The coated APP-II according to the invention has several advantages. It does not require hazardous organic substances, it is stable against hydrolysis, and paint or coating formulations are stable during storage. Specifically, the viscosity does not increase unduly, changes in colour or opacity or phase separation due to hydrolysis of APP are prevented and there is no loss of intumescence.

The invention will be illustrated further with reference to the examples that follow, without restricting the scope to the specific embodiments described. If not otherwise specified any amount in % or parts is by weight and in the case of doubt referring to the total weight of the composition/mixture concerned.

The invention further includes all combinations of described and especially of preferred features that do not exclude each other. A characterization as "approximately", "about", "around" and similar expression in relation to a numerical value means that up to 10 % higher and lower values are included, preferably up to 5 % higher and lower values, and in any case at least up to 1 % higher and lower values, the exact value being the most preferred value or limit.

### Example 1

1001.2 g Ammonium polyphosphate in the crystal phase II (PhosChek® P42, BK Giulini GmbH) was charged into a kneader set to a temperature of 85°C and the stirring was turned on. A silica or alumina suspension (64.69 g) was diluted with water (181.8 g) and the opalescent solution was introduced into the kneader, all at once, when the temperature reached 30°C. The mixture was blended to afford a wet agglomerated material. More water (101.2 g) was charged to afford a suspension of a sour-cream consistency. The temperature of the kneader was set at 85°C and the mixture was blended for 1 h, the internal temperature gradually increased to 67°C. In some cases a vacuum pump was activated at this stage to support the removal of water vapour, whereby the system was not sealed and the pump only created a weak flow of air that carried away the water vapour, which was then condensed in a water separator placed before the pump. The heating was continued for 2.5 h. During the process, water was released and the initial suspension was transformed to a wet powder via stages of a gum-like paste. The temperature was set at 100°C and the blending was continued for an additional 1.5 h until the inner temperature increased to 82°C, the water ceased to evolve and the material converted into a fine powder. The powder was cooled to 35°C under stirring, removed from the kneader and sieved through a 125 µm sieve to afford an off-white fine powder. The conditions, materials used and yields are shown in table 2. The used silica and alumina suspensions are abbreviated as follows :
TMA - a 34 wt. % suspension of "pH stable" colloidal silica in water, Ludox® TMA;
CL - a 30 wt. % suspension of "cationic" colloidal silica in water, Ludox® CL;
HS - a 30 wt. % suspension of "anionic" colloidal silica in water, Ludox® HS;
AS - a 40 wt. % suspension of "anionic" colloidal silica in water, Ludox® AS; and
Al₂O₃ - boehmite alumina powder (Disperal® P2).
For comparison purposes properties for uncoated APP-II and APP-II coated with a melamine formaldehyde resin (MF) (Madurit®, Ineos) are also listed. The notes in the last column mean SER - strong exothermic reaction, AS - air stream created by vacuum pump was applied to facilitate the removal of water vapour.

The following properties of the obtained coated APP-II were analysed and results are also listed in table 2:
S - solubility in a 9 % aqueous suspension
pH - pH value of a 9 % suspension in water
particle size distribution - average particle size D_{AV} and size in µm for which 10 % D_{0.1}, 50 % D_{0.5}, and 90 % D_{0.9} of the particles are smaller
The solubility was determined by stirring 5 g coated APP II in 50 ml water followed by centrifugation. 5 ml of the "solution" above the precipitated APP-II were put on an aluminium foil dish and stored in a dry box for several hours.

**Table 2**

| **Run** | **Coating material** | **ratio coating material/APP** | **Tₘ¹** | **Tₖ²** | **Time** | **Yield** | **S** | **pH** | **particle size distribution, µm** | | | | **Note** |
|---|---|---|---|---|---|---|---|---|---|---|---|---|---|
| | | | | | | | | | **D_{0.1}** | **D_{0.5}** | **D_{0.9}** | **D_{AV}** | |
| APP II | none | | | | | | 4.0 % | 5.3 | 6.6 | 21.2 | 43.6 | 23.4 | |
| APP II | MF | | | | | | <0.1 % | 7.4 | 7.4 | 19.4 | 38.0 | 21.2 | |
| EA014 | TMA | 0.092 | 113 °C | 130 °C | 3 h | 97.4 % | 13.5 % | ND | 4.0 | 17.2 | 39.6 | 19.9 | |
| EA046 | TMA | 0.086 | 105 °C | 120 °C | 3 h | 71.8 % | 16.0 % | 5.1 | 3.5 | 15.0 | 34.0 | 17.2 | |
| EA051 | TMA | 0.043 | 105 °C | 120 °C | 3 h | 75.5 % | 12.2 % | 4.8 | 4.3 | 16.8 | 38.2 | 19.4 | |
| EA052 | TMA | 0.022 | 103 °C | 120 °C | 5 h | 83.0 % | 13.8 % | 4.6 | 4.3 | 17.0 | 36.5 | 19.0 | |
| EA070 | TMA | 0.019 | 111 °C | 120 °C | 5 h | 83.3 % | 13.5 % | 4.5 | 4.1 | 17.0 | 37.2 | 19.1 | |
| EA072 | TMA | 0.019 | 111 °C | 120 °C | 5 h | 85.0 % | 11.0 % | 4.5 | 4.3 | 16.6 | 36.7 | 18.8 | |
| EA055 | TMA | 0.010 | 102 °C | 120 °C | 5 h | 87.5 % | 14.8 % | 4.6 | 4.1 | 16.5 | 36.3 | 18.7 | |
| EA062 | CL | 0.022 | 154 °C | 120 °C | 3 h | ND | ND | ND | ND | ND | ND | ND | SER |
| EA083 | CL | 0.020 | 71 °C | 100 °C | 4.5 h | 80.4 % | 7.8 % | 6.3 | 4.8 | 17.2 | 36.4 | 19.1 | AS |
| EA085 | HS | 0.019 | 82 °C | 100 °C | 5 h | 80.8 % | 8.7 % | 5.9 | 5.2 | 18.9 | 39.3 | 20.8 | AS |
| EA086 | AS | 0.020 | 88 °C | 100 °C | 5.5 h | 66.5 % | 7.8 % | 5.8 | 4.0 | 17.3 | 37.0 | 19.2 | AS |
| EA010 | Al₂O₃ | 0.080 | 200 °C | 175 °C | 4 h | ND | ND | ND | ND | ND | ND | ND | SER |
| EA011 | Al₂O₃ | 0.051 | 107 °C | 128 °C | 3 h | 75% | 11.8 % | ND | 3.3 | 17.1 | 41.2 | 20.1 | |

| | | | | | | | | | | | | | |
|---|---|---|---|---|---|---|---|---|---|---|---|---|---|
| 1 Tₘ - maximum temperature of the reaction mixture, 2 Tₖ - maximum temperature of the kneader. | | | | | | | | | | | | | |

Comparison of the solubility of the materials prepared from various silicas taken in the same ratio with regard to the APP-II (-0.02 w/w) enables the silicas to be graded in the following order: Ludox® TMA (Run EA052) > Ludox® HS (Run EA085) > Ludox® AS (Run EA086) ∼ Ludox® CL (Run EA083).

The treatment of APP II with alumina at an elevated temperature (>130°C, Run EA010) caused a highly exothermic reaction which was accompanied with the evolution of ammonia and transformation of the powdered blend into a solid lump. The XRD-study showed that the product obtained is a complex mixture containing APP-I, aluminium ammonium polyphosphate and aluminium phosphate.

The same phenomenon was observed even at a lower temperature (120°C on the walls) for the cationic grade silica coated material. This was not an unexpected result considering that the CL silica should chemically demonstrate the properties of alumina. Nevertheless, blending alumina powder or cationic grade silica with APP-II at a decreased temperature (<110°C) proceeded without an exothermic reaction and afforded a material with an increased solubility, similar to that of the silica coated APP (Run EA-011).

### Comparative example 2

In view of the fact that the process is accompanied by partial agglomeration, which necessitates sieving, the product output is not ideal in some cases. In an attempt to increase the yield and avoid the sieving, the coating of APP-II with the Ludox® silicas was conducted in a liquid phase using a 1L glass reactor. Suspensions of APP-II and Ludox® TMA (at ratio of 0.041 w/w) in water or aqueous methanol were stirred at room temperature or under reflux, followed by filtration and drying. The properties of the material obtained show that the coating of APP in a liquid phase proceeded to a low extent, if at all. Material with the same properties as the starting APP-II was recovered. The kneading and evaporation step according to the method of the invention is required to obtain a suitable inorganic coating.

### Example 3

APP-II coated with a thin film of silica to afford hydrophilic materials with an increased solubility were tested in the paint formulation listed in table 3.

**Table 3**

| **Component** | **Weight, g** | **content, %** |
|---|---|---|
| Water | 81.00 | 20.25 |
| carboxymethyl cellulose as rheological additive | 0.80 | 0.2 |
| Ammonium hydroxide | 0.40 | 0.1 |
| dispersant | 4.00 | 1 |
| defoamer | 0.30 | 0.075 |
| TiO₂ | 24.00 | 6 |
| pentaerythritol | 40.00 | 10 |
| Water | 17.00 | 4.25 |
| Melamine | 40.00 | 10 |
| **APP II** | **100.00** | **25** |
| Vinyl-acetate dispersion | 92.00 | 23 |
| defoamer | 0.50 | 0.125 |
| **Total** | **400.00** | **100.000** |

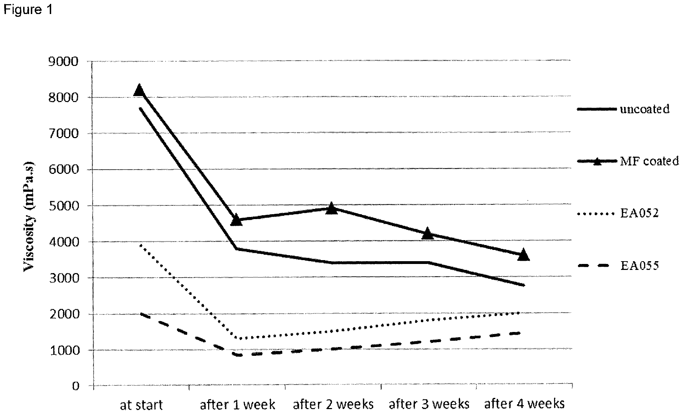

The viscosities of the paints manufactured with different APP-II were measured one day after the preparation of the paints and then every week during four weeks storage time at a temperature of 50°C. The viscosity was measured at 20 turns per minute using a spindle No 6 of a Brookfield Viscosimeter device DV-E. Data on the viscosities are summarized in table 4 and illustrated in Figure 1.

**Table 4**

| **APP** | uncoated | MF coated | EA052 | EA055 |
|---|---|---|---|---|
| **Viscosity [mPas•s]** | | | | |
| at start | 7700 | 8200 | 3900 | 2000 |
| after 1 week | 3800 | 4600 | 1300 | 850 |
| after 2 weeks | 3400 | 4900 | 1500 | 1000 |
| after 3 weeks | 3400 | 4200 | 1800 | 1200 |
| after 4 weeks | 2750 | 3600 | 2000 | 1450 |

It can be seen that silica coated APP-II provides paints with lower viscosity than uncoated APP-II and than the melamine formaldehyde resin coated APP-II according to the prior art.

### Example 4

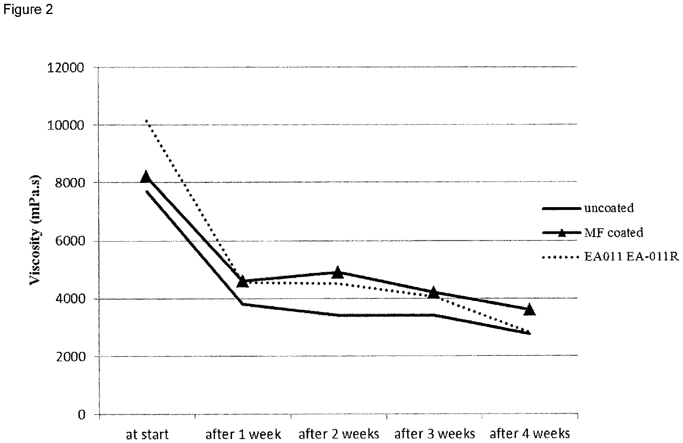

APP-II coated with a thin film of alumina to afford hydrophilic materials with an increased solubility was tested in the paint formulation listed in table 3. The viscosities of the paints manufactured with different APP-II were measured one day after the preparation of the paints and then every week during four weeks storage time at a temperature of 50°C. The viscosity was measured at 20 turns per minute using a spindle No 6 of a Brookfield Viscosimeter device DV-E. Data on the viscosities are summarized in table 5 and illustrated in Figure 2.

**Table 5**

| **APP** | uncoated | MF coated | EA011 |
|---|---|---|---|
| **Viscosity [mPas•s]** | | | |
| at start | 7700 | 8200 | 10150 |
| after 1 week | 3800 | 4600 | 4550 |
| after 2 weeks | 3400 | 4900 | 4500 |
| after 3 weeks | 3400 | 4200 | 4050 |
| after 4 weeks | 2750 | 3600 | 2800 |

It can be seen, that the alumina coated APP-II provides paints with viscosity comparable to uncoated APP-II and melamine formaldehyde resin coated APP-II according to the prior art. The viscosity of the paint decreased significantly during the first week of storage, while during the final 3 weeks the change was much more moderate. Thus, the alumina coating is as good as the prior art in view of viscosity. But the solubility was increased.

## Claims

1. Ammonium polyphosphate of formula (NH₄PO₃)ₙ with n ≥ 100 in the crystal phase II coated with silica or alumina.

2. Ammonium polyphosphate according to claim 1, **characterized in that** it is coated with colloidal silica.

3. Ammonium polyphosphate according to claim 1, **characterized in that** it is coated with highly dispersible boehmite alumina powder.

4. Ammonium polyphosphate according to any one of claims 1 to 3, **characterized in that** 85 % of the particles are smaller than 45 µm, preferably the particle size distribution (as determined via laser diffraction on a dispersed particulate sample) is D_{0.9} <40 µm, D_{0.5} < 20 µm, D_{0.1} < 6 µm, and D_{AV} from 20 to 25 µm, preferably 22 µm.

5. Ammonium polyphosphate according to any one of claims 1 to 4, **characterized in that** it is coated with silica and below or above with alumina.

6. Ammonium polyphosphate according to any one of claims 1 to 4, **characterized in that** it is coated with silica or alumina and below or above with a second coating selected from organic resins, preferably melamine formaldehyde resin, organo silanes and organo siloxanes.

7. Method for coating ammonium polyphosphate with silica or alumina comprising the steps of:
providing ammonium polyphosphate particles,
mixing them with a suspension of colloidal silica or of alumina powder, and
kneading the mixture while evaporating the water thereby providing the coated ammonium polyphosphate.

8. Method according to claim 7, **characterized in that** the coated ammonium polyphosphate is sieved, preferably through a 125 µm sieve.

9. Method according to claim 7 or 8, **characterized in that** the ammonium polyphosphate particles are adapted in their particle size prior to mixing them with a suspension of colloidal silica or of alumina powder.

10. Method according to claim 9 **characterized in that** the ammonium polyphosphate particles are sieved, ground, ground and sieved, or recrystallized prior to mixing.

11. Method according to any one of claims 7 to 10, **characterized in that** the temperature is set to 90 - 110 °C, preferably to 95 - 105 °C, during kneading for evaporation of the water.

12. Method according to any one of claims 7 to 11, **characterized in that** ventilation is applied during kneading to assist the evaporation of water.

13. Method according to any one of claims 7 to 13, **characterized in that** the colloidal silica is selected from colloidal silica stabilized with bases, or colloidal silica stabilized with alumina or colloidal silica stabilized with bases and alumina.

14. Use of an ammonium polyphosphate of formula (NH₄PO₃)ₙ with n ≥ 100 in the crystal phase II coated according to at least one of claims 1 to 6 as component in water based intumescent compositions, preferably in a paint or coating, most preferably a water based solvent free paint or coating.

15. Intumescent composition comprising water and an ammonium polyphosphate according to at least one of claims 1 to 6, wherein the composition preferably is a paint or coating, most preferably a water based solvent free paint or coating.

## Patentansprüche

1. Ammoniumpolyphosphat der Formel (NH₄PO₃)ₙ mit n ≥ 100 in der Kristallphase II beschichtet mit Siliciumdioxid oder Aluminiumoxid.

2. Ammoniumpolyphosphat gemäß Anspruch 1, **dadurch gekennzeichnet, dass** es mit kolloidaler Kieselsäure beschichtet ist.

3. Ammoniumpolyphosphat gemäß Anspruch 1, **dadurch gekennzeichnet, dass** es mit hochdispergierbarem Böhmit-Aluminiumoxidpulver beschichtet ist.

4. Ammoniumpolyphosphat gemäß einem der Ansprüche 1 bis 3, **dadurch gekennzeichnet, dass** 85 % der Partikel kleiner als 45 µm sind, vorzugsweise ist die Partikelgrößenverteilung (bestimmt durch Laserbeugung an einer dispergierten Probe) D_{0,9} < 40 µm, D_{0,5} < 20 µm, D_{0,1} < 6 µm und D_{MW} von 20 bis 25 µm, vorzugsweise ungefähr 22 µm.

5. Ammoniumpolyphosphat gemäß einem der Ansprüche 1 bis 4, **dadurch gekennzeichnet, dass** es mit Siliciumdioxid und darunter oder darüber mit Aluminiumoxid beschichtet ist.

6. Ammoniumpolyphosphat gemäß einem der Ansprüche 1 bis 4, **dadurch gekennzeichnet, dass** es mit Siliciumdioxid oder Aluminiumoxid und darüber oder darunter mit einer zweiten Beschichtung, ausgewählt aus organischen Harzen, vorzugsweise Melaminformaldehydharz, Organosilanen und Organosiloxanen, beschichtet ist.

7. Verfahren zum Beschichten von Ammoniumpolyphosphat mit Siliciumdioxid oder Aluminiumoxid, umfassend die Schritte:
Bereitstellen von Ammoniumpolyphosphatpartikeln,
Mischen dieser mit einer Suspension aus kolloidalem Siliciumdioxid oder Aluminiumoxidpulver und
Kneten der Mischung, während das Wasser verdampft wird, wodurch das beschichtete Ammoniumpolyphosphat bereitgestellt wird.

8. Verfahren gemäß Anspruch 7, **dadurch gekennzeichnet, daß** das beschichtete Ammoniumpolyphosphat gesiebt wird, vorzugsweise durch ein 125 µm-Sieb.

9. Verfahren gemäß Anspruch 7 oder 8, **dadurch gekennzeichnet, dass** die Ammoniumpolyphosphatpartikel vor dem Mischen mit einer Suspension aus kolloidalem Siliciumdioxid oder Aluminiumoxidpulver in ihrer Partikelgröße angepasst werden.

10. Verfahren gemäß Anspruch 9, **dadurch gekennzeichnet, dass** die Ammoniumpolyphosphatpartikel vor dem Mischen gesiebt, gemahlen, gemahlen und gesiebt, oder umkristallisiert werden.

11. Verfahren gemäß einem der Ansprüche 7 bis 10, **dadurch gekennzeichnet, dass** die Temperatur während des Knetens zum Verdampfen des Wassers auf 90 bis 110 °C, vorzugsweise auf 95 bis 105 °C eingestellt wird.

12. Verfahren gemäß einem der Ansprüche 7 bis 11, **dadurch gekennzeichnet, dass** während des Knetens eine Belüftung erfolgt, um das Verdampfen von Wasser zu unterstützen.

13. Verfahren gemäß einem der Ansprüche 7 bis 13, **dadurch gekennzeichnet, dass** das kolloidale Siliciumdioxid ausgewählt ist aus mit Basen stabilisiertem kolloidalem Siliciumdioxid oder mit Aluminiumoxid stabilisiertem kolloidalem Siliciumdioxid oder mit Basen und Aluminiumoxid stabilisiertem kolloidalem Siliciumdioxid.

14. Verwendung eines Ammoniumpolyphosphats der Formel (NH₄PO₃)ₙ mit n ≥ 100 in der Kristallphase II beschichtet gemäß mindestens einem der Ansprüche 1 bis 6 als Komponente in intumeszierenden Zusammensetzungen auf Wasserbasis, vorzugsweise in einer Farbe oder Beschichtung, besonders bevorzugt einer lösungsmittelfreien Farbe oder Beschichtung auf Wasserbasis.

15. Intumeszierende Zusammensetzung, die Wasser und ein Ammoniumpolyphosphat gemäß mindestens einem der Ansprüche 1 bis 6 umfasst, wobei die Zusammensetzung vorzugsweise eine Farbe oder Beschichtung ist, besonders bevorzugt eine lösungsmittelfreie Farbe oder Beschichtung auf Wasserbasis.

## Revendications

1. Polyphosphate d'ammonium de formule (NH₄PO₃)ₙ, dans laquelle n ≥ 100, dans la phase cristalline II, revêtu par de la silice ou de l'alumine.

2. Polyphosphate d'ammonium selon la revendication 1, **caractérisé en ce qu'**il est revêtu par de la silice colloïdale.

3. Polyphosphate d'ammonium selon la revendication 1, **caractérisé en ce qu'**il est revêtu par de la poudre d'alumine de type boehmite hautement dispersible.

4. Polyphosphate ammonium selon l'une quelconque des revendications 1 à 3, **caractérisé en ce que** 85% des particules sont plus petits que 45 µm, de préférence, la distribution des grosseurs des particules (telle que déterminée par diffraction laser sur un échantillon particulaire dispersé) est D_{0,9} < 40 µm, D_{0,5} < 20 µm, D_{0,1} < 6 µm, et D_{MOY} est de 20 à 25 µm, de préférence de 22 µm.

5. Polyphosphate d'ammonium selon l'une quelconque des revendications 1 à 4, **caractérisé en ce qu'**il est revêtu par de la silice et, au-dessus ou sous celle-ci, par de l'alumine.

6. Polyphosphate d'ammonium selon l'une quelconque des revendications 1 à 4, **caractérisé en ce qu'**il est revêtu par de la silice ou de l'alumine et, au-dessus ou sous celle-ci, par un deuxième revêtement choisi parmi les résines organiques, de préférence une résine de mélamine-formaldéhyde, les organosilanes et les organosiloxanes.

7. Procédé pour revêtir du polyphosphate d'ammonium par de la silice ou de l'alumine, comprenant les étapes de:
mise à disposition de particules de polyphosphate d'ammonium,
leur mélange avec une suspension de silice colloïdale ou de poudre d'alumine et
le malaxage du mélange tout en évaporant l'eau ce qui permet d'obtenir le polyphosphate d'ammonium revêtu.

8. Procédé selon la revendication 7, **caractérisé en ce que** le polyphosphate d'ammonium revêtu est tamisé, de préférence à travers un tamis de 125 µm.

9. Procédé selon la revendication 7 ou 8, **caractérisé en ce que** la grosseur de particule des particules de polyphosphate d'ammonium est adaptée avant leur mélange avec une suspension de silice colloïdale ou de poudre d'alumine.

10. Procédé selon la revendication 9, **caractérisé en ce que** les particules de polyphosphate d'ammonium sont tamisées, broyées, broyées et tamisées ou recristallisées avant le mélange.

11. Procédé selon l'une quelconque des revendications 7 à 10, **caractérisé en ce que** la température est réglée à 90-110°C, de préférence à 95-105°C, pendant le malaxage pour l'évaporation de l'eau.

12. Procédé selon l'une quelconque des revendications 7 à 11, **caractérisé en ce qu'**une ventilation est appliquée pendant le malaxage pour soutenir l'évaporation de l'eau.

13. Procédé selon l'une quelconque des revendications 7 à 13, **caractérisé en ce que** la silice colloïdale est choisie parmi la silice colloïdale stabilisée par des bases ou la silice colloïdale stabilisée par de l'alumine ou la silice colloïdale stabilisée par des bases et de l'alumine.

14. Utilisation d'un polyphosphate d'ammonium de formule (NH₄PO₃)ₙ, dans laquelle n ≥ 100, dans la phase cristalline II, revêtu selon au moins l'une quelconque des revendications 1 à 6 comme constituant dans des compositions intumescentes à base d'eau, de préférence dans une peinture ou un revêtement, plus préférablement une peinture ou un revêtement à base d'eau, exempt(e) de solvant.

15. Composition intumescente comprenant de l'eau et un polyphosphate d'ammonium selon au moins l'une quelconque des revendications 1 à 6, la composition étant de préférence une peinture ou un revêtement, plus préférablement une peinture ou un revêtement à base d'eau, exempt(e) de solvant.
